# EUROPEAN PATENT APPLICATION

(11) **EP 0 749 145 A1**
(43) Date of publication of application: **18.12.1996**
(21) Application number: 96108416.7
(22) Date of filing: 28.05.1996
(51) Int. Cl.: H01H 83/02

(54) **Improvement in differential-type safety cut-out switches for household appliances**

(30) Priority: 15.06.1995 IT PN950033
(71) Applicant: ELECTROLUX ZANUSSI ELETTRODOMESTICI S.p.A., I-33170 Pordenone (IT)
(72) Inventor: Frucco, Giuseppe, 33170 Pordenone (IT); Daffara, Roberto, 20011 Corbetta, Milano (IT)
(74) Representative: Giugni, Valter

(57) **Abstract**

A household appliance comprises a main power-supply ON/OFF switch and a plurality of electric loads, and it is associated to a differential-type safety cutout arrangement provided in the power-supply line to the appliance, wherein said differential-type safety cutout arrangement is adapted to open said main power-supply ON/OFF switch and includes an element capable of sensing an unbalance condition of the current in the power-supply line, a control unit, and an actuator means controlled by said control unit and adapted to open said main power-supply ON/OFF switch.

## Description

The present invention refers generally to electric household appliances which are equipped with a general power-supply ON-OFF switch and to which a differential-type safety cutout switch is generally associated, said safety cutout switch being usually arranged somewhere outside the appliance itself, typically on the power supply cord or the connection plug.

These differential-type safety cutout switches are in particular used to protect the larger, more power demanding and complex electric appliances used in the home, such as for instance a washing machine, an oven, a dishwasher, a freezer, etc., in which a failure of the insulation of the inner circuits in general may lead to much more serious malfunctions and, more than that, may prove much more dangerous for a user who happens to fortuitously come into contact with exposed parts or components that are accidentally and undesirably energized by said appliances.

They are further more frequently used in older houses or flats which cannot rely on the provision of some sort of a central differential-type safety cutout or circuit-breaker arrangement, wherein the provision of individual differential-type safety switches associated to respective appliances of various types is used also to at least partially make up for the absence of such a centralized safety circuit-breaking arrangement.

These devices fall into the category of portable safety devices and are provided with a reset push-button and, possibly, a manually actuatable checkout circuit facility.

Usually these devices are set to trip at values ranging from 10 to 30 mA.

The reset push-button is released automatically upon the occurrence of a current creepage or leakage inside the appliance by a sensor and control arrangement that is directly associated to the power-supply line and said push-button.

Upon due removal of the cause originating the irregular condition, the safety device is reset from the outside through the actuation of the reset push-button.

The above description has been given merely by way of reference, since the construction, purpose and manner of operation of such differential-type safety cutout switches are generally known in the art.

All of such switches, however, share a common drawback which substantially derives from the fact that their manual-reset actuating member is arranged in such locations that are a natural choice in connection with the power supply circuit, such as for instance on the cord plug itself, but quite difficult to reach by the user.

This is particularly true, and inconvenient, in all those cases in which the appliances are built into specially provided cabinets or recesses in the kitchen or elsewhere in the house, since it usually becomes then necessary to remove the appliance from its built-in position in order to be able to get at the reset push-button.

In view of reducing the extent of such a drawback, solutions have been implemented which call for the reset push-button to be provided in a more easily accessible location, such as for instance under the appliance socle or directly on the control panel of the same appliance.

However, such solutions are not integrated in the operating mode, ie. the functions of the appliance, so that they actually represent just a further control provision to the user who may also be led into some confusion as far as the actual function and actuation thereof are concerned.

It would therefore be desirable, and it is actually a purpose of the present invention, to provide electrical appliances, in particular electrical household appliances, which are equipped with a readily accessible differential-type safety cutout switch, the operation of which is further integrated in the function of the power-supply ON/OFF switch so that the user is able to use a single and same control means to act both as a main ON/OFF switch and a reset button for the differential-type safety cutout switch.

Such an integrated arrangement shall furthermore be of a simple and inexpensive construction, ensure a fully reliable operation, and make use of readily available techniques.

According to the invention, such an aim is reached in an arrangement with the features and characteristics as recited in the appended claims.

The present invention will anyway be more clearly understood from the description that is given below by way of non-limiting example with reference to the accompanying drawings, in which:

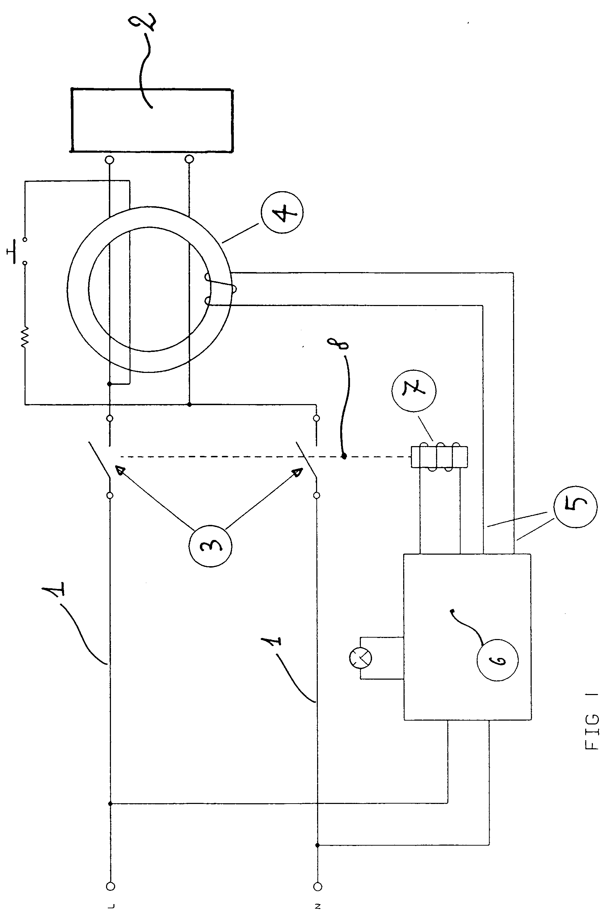

- Figure 1 is a simplified wiring schematics of an arrangement according to the present invention.

The solution devised in accordance with the present invention lies substantially in providing and arranging on the power-supply line 1 to the appliance 2 a combined ON-OFF/differential switch comprising a line isolating element 3, a sensor element 4 detecting possible unbalances in the current absorbed by the appliance, said sensor element being arranged between said appliance and said line isolating element and being preferably, but not exclusively, formed by a toroid 4 of a ferromagnetic material on which some turns of the two wires of the power-supply line 1 are coiled symmetrically in a *per sè* known manner.

Said toroid is further wound by some turns of a conductor 5 which is arranged to transmit the voltage signal, which is induced by the electromagnetic flux flowing across the toroid, to a control unit 6. The latter is a logic-type arrangement that can be implemented according to currently available techniques and knowledges, and which is provided and programmed to process the signal carried by the conductor 5, compare it with a pre-set value and, should there a condition be detected in which said signal, and therefore the corresponding current unbalance condition in the power-supply line 1, exceeds said pre-determined value, said arrangement 6 is adapted to send an appropriate signal or pulse to an actuator 7 of any suitable type, which is adapted to break the power-supply circuit 1.

Said actuator 7 may be anyone among the currently available types that are suitable for the application. In a preferred manner, however, it is formed by a coil of a relay 7, the moving element of which, which is symbolically indicated at 8, is connected with said isolating element 3 of the power-supply line and is adapted to switch it into opening.

Said line isolating element 3 is not arranged outside the appliance, but is on the contrary provided as an integrant part thereof. It is further provided with an actuation member (not shown), located in a position which is normally accessible by the user, through which the same user can operateit by selectively switching it into opening or closing.

Such an actuating member also acts as a main ON/OFF switch, since it is actually able to perform the functions thereof, and it is therefore arranged preferably on the control panel of the appliance, in particular if the latter is a traditional electric household appliance.

In an advantageous manner, such an arrangement brings about further improvements both in the appliance and the operation thereof. As a matter of fact, the provision of such an actuating member in the ON/OFF switch enables, by programming the control unit 6 correspondingly, such a switch to be automatically turned off at the end of an operation cycle, thereby achieving clear advantages in safety terms.

Additionally, further commands or signals concerning the safety of the appliance in general, such as for instance water safety provisions in connection with the signalling of and protection against such situations as water leakages, excessive filling of a tub or tank, and the like, may be conveyed to said control unit 6 to act on the safety cutout/on-off switch accordingly.

A further possibility is given by the fact that the differential-type circuit of the cut-out arrangement can be adjusted so as to cause it to trip at a lower tripping threshold value, however in the presence of currents that exceed such a threshold for a longer time as compared to the tripping current and time ratings of the general differential-type circuit-breaker provision of the home installation which is aimed at providing protection against accidents that may be caused by all of the power-operated loads in the house. With such an adjustment it is in fact possible to prevent each current unbalance, however it may also be occasioned, from being able to actuate the central circuit-breaker and, therefore, cut out the whole home installation, while protecting the appliance against an irregular, but not yet dangerous condition, such as it may for instance arise during the temporary occurrence of slight current leakages over or through the insulation or short, small-extent electric discharges (tracking) thereinside.

It is therefore fully apparent, based on the explanations and illustrations given above, that such an element 3 acts both as the main power-supply ON/OFF switch of an appliance, since the appliance can be connected to or isolated from its power-supply source therethorugh, and the manual reset element of the differential-type safety cutout switch, since the tripping of said cutout switch causes said element 3 to open, said element 3 being however adapted to be reset manually and being further capable of being activated and set to also perform or ensure further functions concerning the safety of the appliance,

The manner in which the arrangement as generally described above is capable of effectively accomplishing a double task of performing as both a main ON/OFF switch and manual reset member of a differential-type safety cutout switch built into the appliance, thereby doing away with control redundancies and construction complexities, and making it easier for the user to operate the appliance, according to the purpose of the present invention, is also fully apparent now.

It will of course be appreciated that each appliance can also be provided with a combined differential-type safety cutout/main ON/OFF switch arrangement in manners that differ from the above described and illustrated one, without departing from the scope of the present invention.

## Claims

1. Electric household appliance (2) comprising a main power-supply ON/OFF switch (3) and a plurality of electric loads, and associated to a differential-type safety cutout arrangement provided on the power-supply line (1) to said appliance, **characterized in that** said differential-type safety cutout arrangement is associated with the inner circuitry of said appliance and is adapted to be reset through an appropriate actuating member arranged on the exterior of the same appliance.

2. Appliance according to claim 1, **characterized in that** said differential-type safety cutout arrangement is adapted to open said main power-supply ON/OFF switch (3) when a current unbalance in the power supply line to said appliance is detected to exceed a pre-determined value.

3. Appliance according to claim 2, **characterized in that** said differential-type safety cutout arrangement comprises a sensor element (4) capable of sensing an unbalance condition of the current in the power-supply line, a control unit (6), and actuator means (7) driven by said control unit (6) to open said main power-supply ON/OFF switch (3).

4. Appliance according to claim 4, **characterized in that** said actuator means is operated by the coil of a relay.

5. Appliance according to claim 3 or 4, **characterized in that** said control unit (6) is adapted to cause said main power-supply ON/OFF switch (3) to open at the end of each duty or operation cycle of the appliance.

6. Appliance according to any of the preceding claims, **characterized in that** said control unit (6) is adapted to detect further signals of water-related malfunctions and to cause said main power-supply ON/OFF switch (3) to open when the presence of at least one of said signals is detected.

7. Appliance according to claim 5, **characterized in that** one of said signals of water-related malfunctions is generated by water leakages.
